# EUROPÄISCHE PATENTANMELDUNG

(11) **EP 4 360 814 A1**
(43) Veröffentlichungstag der Anmeldung: **01.05.2024**
(21) Anmeldenummer: 23205117.7
(22) Anmeldetag: 23.10.2023
(51) Int. Cl.: B25J 9/00, B25J 15/06, B65G 47/24

(54) **KOMMISSIONIERSYSTEM, ABLAGESTRUKTUR UND VERFAHREN ZUM UMLAGERN VON ARTIKELN MIT EINEM UMGREIF-ABLAGEPLATZ**

(30) Priorität: 24.10.2022 DE 102022128069
(71) Anmelder: IGZ Ingenieurgesellschaft für logistische Informationssysteme mbH, 95685 Falkenberg (DE)
(72) Erfinder: Zrenner, Johann, 95685 Falkenberg (DE)
(74) Vertreter: Strehl Schübel-Hopf & Partner

(57) **Zusammenfassung**

Die Erfindung geht aus von einem Kommissioniersystem mit einem Kommissionierroboter (10) mit einem Sauggreifer (12) zum Greifen und Umlagern von Artikeln (14) und mit einem Umgreif-Ablageplatz (20) zum Ablegen und wieder aufnehmen der Artikel (14).

Es wird vorgeschlagen, dass der Umgreif-Ablageplatz (20) eine Ablagestruktur (20c) zum Ablegen eines Artikels (14) in einer ersten Orientierung, wobei die Ablagestruktur (20c) einen Anlagewinkel umfasst, der so konfiguriert ist, dass der Artikel (14) in einer wenigstens vorübergehend zwischen dem Ablegen und dem wieder Aufnehmen eines Artikels auftretenden Konfiguration unter Wirkung der Schwerkraft in den Ablagewinkel hineingleitet, und die Steuerung (28) dazu ausgelegt ist, den Sauggreifer (12) so zu steuern, dass dieser den Artikel (14) in einer anderen Orientierung als der ersten Orientierung wieder aufnimmt.

## Beschreibung

Die Erfindung betrifft ein Kommissioniersystem mit einem Umgreif-Ablageplatz nach dem Oberbegriff des Anspruchs 1 und ein Verfahren nach dem Oberbegriff des Anspruchs 7.

Das Dokument WO 2018132855 A1 offenbart ein Kommissioniersystem mit einem Klärplatz/Umgreif-Ablageplatz und einer "Klappe", die zwischen Quell- und Zielbehälter angeordnet ist. Die Klappe kann vom Roboter hochgeschwenkt werden oder zu diesem Zweck einen Stellantrieb umfassen.

Das Dokument WO 2017198281 A1 offenbart eine Zwischenablage zum Umgreifen der Artikel.

Die Dokumente DE 102010002317 B4 und EP 2477914 B1 offenbaren ein System mit zwei "Erfassungseinrichtungen" und zwar einer Kamera zur Erfassung vom Position, Form, Größe des Artikels im Quellbehälter und einen davon getrennten Barcode-Leser auf der Trajektorie zwischen Quell- und Zielbehälter. Eine Ablagezone zum Umgreifen ist nach dem Barcode-Leser angeordnet und kann genutzt werden, um umzugreifen, wenn der Barcode-Leser den Barcode nicht lesen konnte.

Zwischenablagen aus in robotergestützten Kommissionieranlagen sind ferner aus der WO 2012163666 A1 bekannt, die einen Zwischenpuffer zum Ablegen von Artikeln zeigt, in dem die Artikel zusammengestellt werden, bevor sie mit Hilfe einer Kipplatte in einen Zielbehälter gekippt werden. Das Dokument EP 2 650 237 B1 offenbart ein Multi-Order-Picking-System in dem Sammelbehälter in- und aus dem Arbeitsbereich des Roboters gefahren werden und Waren, die in einen gerade außerhalb des Arbeitsbereichs liegenden Sammelbehälter gehören, auf einem Pufferplatz zwischengelagert werden. Aus der WO 2015118171A1 ist eine Zwischenablage bekannt, die die Übergabe eines Artikels zwischen zwei Greifarmen vereinfacht.

Insbesondere beim Kommissionieren, aber auch bei anderen Umlagerungsvorgängen, kann es vorkommen, dass die Orientierung eines quaderförmigen Artikels in einem Quellbehälter nicht der Orientierung entspricht, in der der Artikel in den Zielbehälter gelegt werden soll. Insbesondere dann, wenn ein Packmuster im Zielbehälter optimiert werden soll, kann die Möglichkeit einer Änderung der Orientierung einen weiteren Freiheitsgrad eröffnen, der eine weitere Optimierung der Packdichte ermöglicht.

Beim Greifen von quaderförmigen Artikeln mit einem Sauggreifer greift der Sauggreifer den Artikel in der Regel an einer horizontalen Oberseite des Artikels, so dass der Artikel hängend angehoben und transportiert wird. Eine Änderung der Orientierung des Artikels vor dem Ablegen ist in diesen Fällen aus verschiedenen Gründen problematisch. Zum einen erzeugt nach einer Drehung nicht mehr senkrecht am Sauggreifer hängende Artikel ein Kippmoment, das zu einem Ablösen und Herunterfallen des Artikels führen kann. Zum anderen würde selbst dann, wenn man dieses Risiko durch Verwendung eines entsprechend starken und starren Sauggreifers verringern würde, das Einlegen des Artikels in einen Zielbehälter durch die dann horizontale Ausrichtung des Sauggreifers erschwert, da es schwierig oder unmöglich wäre, die vorhandenen Störkonturen zu umgehen oder den Artikel in eine enge Lücke zwischen benachbarten Artikeln einzusetzen.

Die bekannten Ablagebereiche bzw. Ablagetische sind ebene Flächen. Bei einer bestimmungsgemäßen Nutzung des Sauggreifers wäre die Orientierung beim Ablegen und wieder Aufnehmen des Artikels unverändert oder der Kommissionierroboter müsste sein Endglied in einer zweitaufwendigen Bewegung um 90° drehen und den Artikel in einer Konfiguration mit waagerechtem Endglied aufnehmen, was große Kippmomente erzeugt.

Der Erfindung liegt die Aufgabe zugrunde, ein Kommissioniersystem und ein Verfahren zum Kommissionieren bereitzustellen, in dem beim Umlagern bzw. Kommissionieren eines Artikels mit einem Sauggreifer die Orientierung des Artikels schnell, einfach und ohne ausladende Bewegungen des Kommissionierroboters verändert werden kann.

Die Aufgabe wird gelöst durch ein Kommissioniersystem und ein Verfahren mit den Merkmalen der unabhängigen Ansprüche. Vorteilhafte Ausgestaltungen der Erfindung ergeben sich aus den Unteransprüchen.

Die Erfindung betrifft ein Kommissioniersystem mit einem Kommissionierroboter mit einer Steuerung und mit einem Sauggreifer zum Greifen und Umlagern von Artikeln und mit einem Umgreif-Ablageplatz zum Ablegen und wieder aufnehmen der Artikel. Das Erfindungsgemäße Kommissioniersystem ist insbesondere zum Kommissionieren von quaderförmigen Artikeln ausgelegt, kann aber auch für anders geformte Artikel genutzt werden, beispielsweise zylinderförmige Artikel, Flaschen oder Beutel.

Es wird vorgeschlagen, dass der Umgreif-Ablageplatz eine Ablagestruktur zum Ablegen des Artikels einer ersten Orientierung, wobei die Ablagestruktur einen Anlagewinkel umfasst, der so konfiguriert ist, dass der Artikel in einer wenigstens vorübergehend zwischen dem Ablegen und dem wieder Aufnehmen eines Artikels auftretenden Konfiguration unter Wirkung der Schwerkraft in den Ablagewinkel hineingleitet, und die Steuerung dazu ausgelegt ist, den Sauggreifer so zu steuern, dass dieser den Artikel in einer anderen Orientierung als der ersten Orientierung wieder aufnimmt. Die Unterschiedlichen Orientierungen ergeben sich insbesondere dadurch, dass der Sauggreifer den Artikel beim Ablegen und Aufnehmen an unterschiedlichen Positionen, insbesondere unterschiedlichen Flächen greift. Dabei kann der Sauggreifer den Artikel beim Ablegen an einer ersten Fläche greifen und beim wieder Aufnehmen den Artikel an einer zweiten Fläche greifen, wobei die zweite Fläche in einem Winkel, insbesondere senkrecht zur ersten Fläche orientiert ist.

Durch das Hineingleiten des Artikels in den Anlagewinkel zwischen dem Ablegen und wieder Aufnehmen wird der Artikel präzise zentriert und ausgerichtet, so dass beim Ablegen des Artikels eine präzise Position und Orientierung angesteuert und gewählt werden kann. Dadurch kann insbesondere beim Kommissionieren eine hohe Packdichte erreicht werden.

In einer Weiterbildung der Erfindung wird vorgeschlagen, dass das Kommissioniersystem einen Aktuator zum Bewegen der Ablagestruktur umfasst, wobei die Steuerung dazu ausgelegt ist, die Ablagestruktur nach dem Ablegen und vor dem Aufnehmen des Artikels so zu bewegen, dass eine Orientierung des Artikels im Raum verändert wird. Durch die bewegbare Ablagestruktur kann eine Änderung der Orientierung mit geringen Bewegungen des Kommissionierroboters erfolgen, insbesondere mit geringer oder komplett entfallender Änderung der Orientierung des Endglieds, so dass die Orientierung des Artikels in einer schnellen und einfachen Weise ermöglicht wird.

Ferner wird vorgeschlagen, dass die Steuerung dazu ausgelegt ist, den Aktuator so zu steuern, dass die Ablagestruktur eine Schwenkbewegung von einer Ablagekonfiguration der Ablagestruktur zu einer Aufnahmekonfiguration der Ablagestruktur ausführt und die vorübergehend auftretende Konfiguration eine Zwischenstellung der Schwenkbewegung ist. Dadurch können schnelle Bewegungsabläufe aufgrund der Bewegung der Ablagestruktur mit den Vorteilen des selbsttätigen Zentrierens und Ausrichtens in der Zwischenstellung kombiniert werden.

In einer vorteilhaften Ausgestaltung der Erfindung ist die Ablagestruktur so gestaltet, dass eine Ecke nach unten weist. Durch die nach unten weisender Ecke sind die drei der Ecke gegenüberliegenden Seiten der Quaderform des Artikels schräg orientiert, insbesondere im Winkel der Flächen eines Würfels mit senkrecht stehender Raumdiagonale, so dass der Sauggreifer den Artikel zwar an einer schräg verlaufenden Fläche greifen muss, die dabei entstehenden Kippmomente aber hinreichend klein sind, um den Artikel sicher zu halten. Die Bezeichnungen "gekippt" bzw. "nach unten weisender Ecke" bedeuten in diesem Zusammenhang, dass die Seitenflächen des Artikels gegenüber der horizontalen bzw. vertikalen Richtung geneigt sind, insbesondere um mehr als 25°, besonders vorteilhaft um mehr als 30°. Durch das Schrägstellen gleitet der Artikel auch bei einer ungenauen Ablage unter Wirkung der Schwerkraft in die Ablagestruktur hinein bis zu einer Anlagefläche und erreicht so selbständig eine definierte Anlageposition. Durch die Schrägstellung wird eine Selbstzentrierung mit Hilfe der Gravitationskraft erreicht.

In einer vorteilhaften Ausgestaltung der Erfindung hat die Ablagestruktur eine winkelförmige und/oder trichterförmige Oberfläche, wobei auch Trichter- Kegel- Kelch- oder Kalottenformen mit sechskant- achtkant- oder sternförmigen Profilen oder eine Pyramidenform oder Tetraederform mit nach unten weisender Spitze denkbar sind. Die Ablagestruktur kann an die zu kommissionierenden bzw. umzulagernden Artikel angepasst sein und z.B. zum Umgreifen von zylinderförmigen Artikeln eine Ablagefläche mit einer Rinne oder Mulde umfassen, die ein Wegrollen des zylinderförmigen Artikels vermeidet.

In der bevorzugten Ausgestaltung umfasst die Ablagestruktur drei im Wesentlichen senkrecht zueinanderstehende Ablageflächen, insbesondere in der Form von drei an eine gemeinsame Ecke angrenzenden Würfelflächen.

Insbesondere wird vorgeschlagen, dass die Ablageflächen jeweils in einem gleichen Winkel zu einer vertikalen Richtung ausgerichtet sind, der dem Winkel zwischen der Raumdiagonalen und der Flächendiagonalen eines Würfels entspricht, also ca. 35.2°.

In der bevorzugten Ausgestaltung der Erfindung ist die Ablagestruktur um eine vertikale Achse drehbar gelagert. Dadurch kann der Artikel abgelegt, gedreht und dann wieder aufgenommen werden, ohne, dass der Greifarm des Kommissionierroboters seine Orientierung verändern muss. Es wären auch Ausgestaltungen der Erfindung denkbar, in denen der Artikel unbewegt auf einer starren Ablagestruktur liegt und der Greifarm zum Greifen einer andern Fläche des quaderförmigen Artikels bewegt wird.

In einer vorteilhaften Ausgestaltung der Erfindung umfasst das Kommissioniersystem einen Aktuator zum Drehen der Ablagestruktur um die vertikale Achse. Der Aktuator kann von der Steuerung des Kommissionierroboters wie ein zusätzlicher Freiheitsgrad gesteuert werden. Es wären auch Ausgestaltungen der Erfindung denkbar, in denen der Greifarm des Kommissionierroboters die Ablagestruktur berührt und bewegt.

In einer Weiterbildung der Erfindung wird vorgeschlagen, dass die Ablagestruktur zwei Bewegungsfreiheitsgrade hat, und zwar insbesondere, dass die Ablagestruktur um zwei Achsen gekippt werden kann. Dadurch wird in einer konstruktiv und steuerungstechnisch einfachen Weise eine Umorientierung des Artikels in jede beliebige Raumrichtung ermöglicht.

Ferner wird vorgeschlagen, das Kommissioniersystem mit einer die Ablagestruktur umgebenden Auffangfläche mit einem Gefälle zu einem Quellbehälter-Stellplatz auszustatten, wobei die Auffangfläche so konfiguriert ist, dass ein in einer Umgebung der Ablagestruktur herabfallender Artikel, der aus einem Quellbehälter aufgenommen wurde, wieder in den Quellbehälter rutscht oder rollt.

In einer weiteren Ausgestaltung der Erfindung wird vorgeschlagen, dass die Ablagestruktur um eine horizontale Achse schwenkbar gelagert ist. Dadurch kann eine Drehung des Artikels erreicht werden, in sowohl eine Fläche des Artikels
In einer Weiterbildung der Erfindung wird vorgeschlagen, die Ablagestruktur um eine schräg im Raum verlaufende Achse schwenkbar gelagert ist. Dadurch kann insbesondere während der Schwenkbewegung, aber auch in der Ablage- und Aufnahmekonfiguration der Ablagefläche, eine Selbstzentrierung des Artikels erreicht werden.

Die oben beschrieben verschiedenen Achsenrichtungen können auch kombiniert werden, indem die Ablagestruktur mit mehreren Schwenkachsen ausgestattet wird bzw. die Ablagestruktur in einer komplexen Bewegung geführt wird, z.B. über eine Kulissenführung oder Getriebestangen.

In einer vorteilhaften Ausgestaltung der Erfindung wird vorgeschlagen, dass die Ablagestruktur einen Anlagewinkel umfasst, der so konfiguriert ist, dass der Artikel wenigstens in einer Zwischenstellung einer Schwenkbewegung zwischen einer Ablagekonfiguration der Ablagestruktur und einer Aufnahmekonfiguration der Ablagestruktur unter Wirkung der Schwerkraft in den Ablagewinkel hineingleitet. Dadurch wird ein selbsttägiges Zentrieren und Ausrichten des Artikels ermöglicht.

Ein weiterer Aspekt der Erfindung betrifft eine Ablagestruktur zur Verwendung in einem Kommissioniersystem der oben genannten Art, die Ablagestruktur, optional mit einem Aktuator zum Drehen, kann in bestehenden Kommissioniersystemen nachgerüstet oder dann ergänzt werden, wenn ein bestimmter Kommissionierauftrag eine Änderung der Orientierung des Artikels verlangt.

Ein weiterer Aspekt der Erfindung betrifft ein Verfahren zum Umlagern von quaderförmigen Artikeln aus einem Quellbehälter in einen Zielbehälter mit einem Kommissioniersystem der oben beschriebenen Art. Das Verfahren umfasst die Schritte Aufnehmen eines Artikels aus dem Quellbehälter, wobei der Sauggreifer den Artikel an einer ersten Fläche greift, Ablegen des Artikels auf der Ablagestruktur, Aufnehmen des Artikels von der Ablagestruktur, wobei der Sauggreifer den Artikel an einer zweiten Fläche greift, wobei die zweite Fläche senkrecht zur ersten Fläche orientiert ist.

In einer vorteilhaften Ausgestaltung der Erfindung wird die Ablagestruktur nach dem Ablegen des Artikels auf der Ablagestruktur und vor dem Aufnehmen des Artikels von der Ablagestruktur um eine vertikale Achse gedreht.

Ferner wird vorgeschlagen, dass im erfindungsgemäßen Kommissioniersystem bzw. im erfindungsgemäßen Verfahren mit Hilfe einer Bildverarbeitungssoftware eine Orientierung des aus dem Zielbehälter aufgenommenen quaderförmigen Artikels ermittelt wird und dieser nur dann auf der Ablagestruktur abgelegt und wieder aufgenommen wird, wenn die ermittelte Orientierung von einer Soll-Orientierung für die Ablage im Zielbehälter abweicht.

Weitere Merkmale und Vorteile ergeben sich aus der folgenden Figurenbeschreibung. Die gesamte Beschreibung, die Ansprüche und die Figuren offenbaren Merkmale der Erfindung in speziellen Ausführungsbeispielen und Kombinationen. Der Fachmann wird die Merkmale auch einzeln betrachten und zu weiteren Kombinationen oder Unterkombinationen zusammenfassen, um die Erfindung, wie sie in den Ansprüchen definiert ist, an seine Bedürfnisse oder an spezielle Anwendungsbereiche anzupassen.

Dabei zeigen:
Fig. 1 ein Kommissioniersystem nach einem ersten Ausführungsbeispiel der Erfindung;
Fig. 2 einen Umgreif-Ablageplatz des Kommissioniersystems gemäß Fig. 1;
Fig. 3a - 3d verschiedene Schritte eines Verfahrens zum Umlagern von quaderförmigen Artikeln aus einem Quellbehälter in einen Zielbehälter;.
Fig. 4a - 4c verschiedene Konfigurationen eines Kommissioniersystems nach einem zweiten Ausführungsbeispiel der Erfindung mit zwei horizontalen Schwenkachsen;
Fig. 5a - 5d verschiedene Konfigurationen eines Kommissioniersystems nach einem dritten Ausführungsbeispiel der Erfindung mit einer horizontalen Schwenkachse; und
Fig. 6a - 6c verschiedene Konfigurationen eines Kommissioniersystems nach einem vierten Ausführungsbeispiel der Erfindung mit einer schräg verlaufenden Schwenkachse.

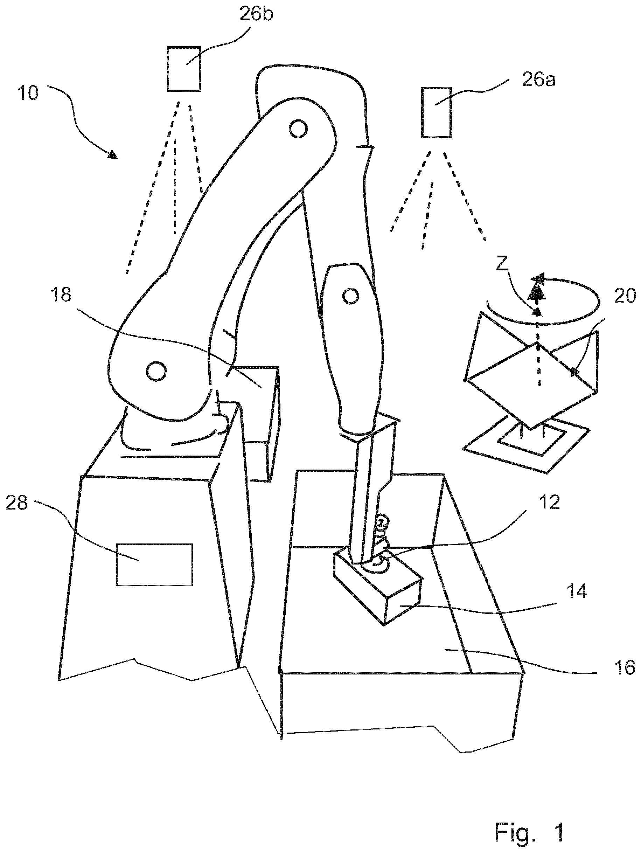

Figur 1 zeigt ein erstes Ausführungsbeispiel der Erfindung. Das Kommissioniersystem umfasst eine Kommissionierroboter 10 mit einem Sauggreifer 12 zum Greifen und Umlagern von quaderförmigen Artikeln 14. Die Artikel 14 werden aus Quellbehältern 16 entnommen und in Zielbehälter 18 abgelegt, wobei die Quellbehälter 16 und Zielbehälter 18 durch geeignete Fördertechnik angedient werden. Der Kommissionierroboter 10 umfasst eine oberhalb des Quellbehälters 16 angeordnete Kamera 26a und eine oberhalb des Zielbehälters 18 angeordnete Kamera 26b und eine in den Sockel des Kommissionierroboters 10 integrierte Steuerung 28 zum Ermitteln der Greifpunkte und Ablageorte für die umzulagernden Artikel.

Der Sauggreifer 12 ist Teil einer um eine horizontale Achse drehbaren Greifvorrichtung mit mehreren verschiedenen Sauggreifern 12, die durch Drehen der Greifvorrichtung aktiviert bzw. deaktiviert werden können.

Die Ablage im Zielbehälter 18 folgt einen vorgegebenen Packmuster, das der Steuerung 28 berechnet und optimiert wurde, wobei bei der Berechnung des Packmusters nicht nur die aus den Stammdaten eines Lagerverwaltungssystems bekannten Maße der quaderförmigen Artikel 14 berücksichtigt werden, sondern auch seine Orientierung.

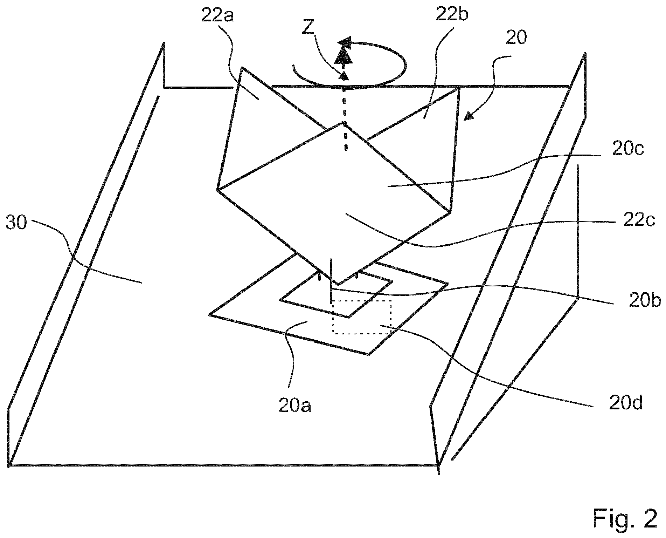

Ferner umfasst das Kommissioniersystem einen in Fig. 2 detaillierter dargestellten Umgreif-Ablageplatz 20 zum Ablegen und wieder aufnehmen der Artikel 14. Der Umgreif-Ablageplatz 20 umfasst einen Sockel 20a mit einer vertikalen Stütze 20b und eine winkelförmige und/oder trichterförmige Ablagestruktur 20c zum Ablegen des Artikels 14 mit nach unten weisender Ecke.

Die Ablagestruktur 20c hat drei im Wesentlichen senkrecht aufeinander stehende, quadratische Ablageflächen 22a - 22c mit nach unten weisendem Innenwinkel, wobei die Ablageflächen 22a - 22c die Form und Orientierung der drei unteren Seiten eines mit vertikaler Raumdiagonale auf einer Spitze stehenden Würfels haben.

Die Ablagestruktur 20c ist im Sockel 20a um eine vertikale Achse Z drehbar gelagert und umfasst einen in den Sockel 20a integrierten, von der Steuerung 28 des Kommissionierroboters 10 steuerbaren Aktuator 20d zum Drehen der Ablagestruktur 20c um die vertikale Stütze 20b.

In dem in Fig. 2 dargestellten Ausführungsbeispiel ist das Kommissioniersystem mit einer die Ablagestruktur umgebenden Auffangfläche 30 mit einem Gefälle zu einem Quellbehälter-Stellplatz ausgestattet. Die Auffangfläche 30 ist so konfiguriert, dass ein in einer Umgebung der Ablagestruktur 22c herabfallender Artikel, der aus einem Quellbehälter 16 aufgenommen wurde, wieder in den Quellbehälter 16 rutscht oder rollt. Dazu kann die Auffangfläche 30 eine gleitende Beschichtung oder eine Kugelrollenbahn umfassen. Die Auffangfläche 30 kann natürlich auch in jedem der anderen, im Folgenden beschriebenen Ausführungsbeispiele vorgesehen sein.

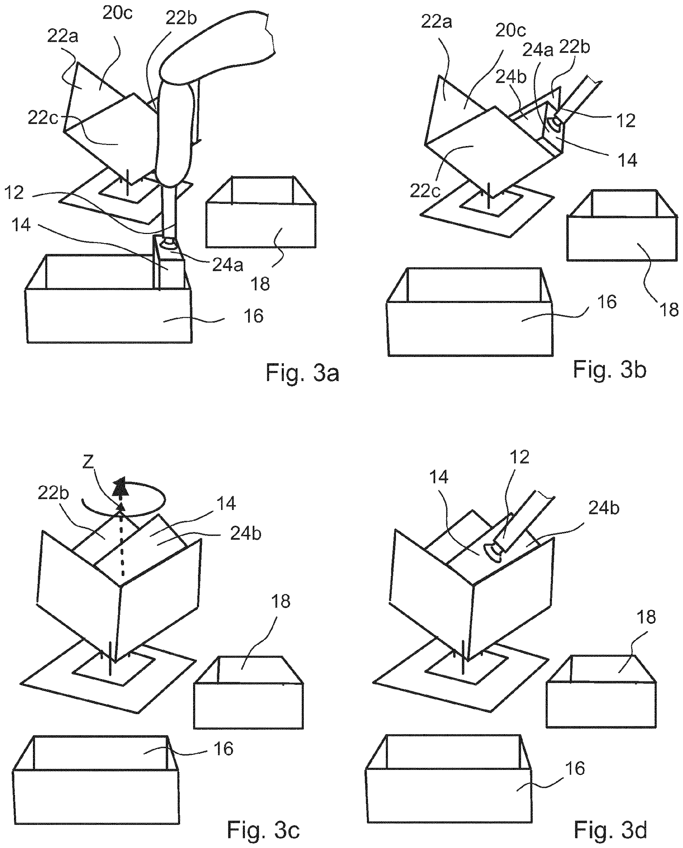

Die Figuren 3a - 3d illustrieren ein Verfahren zum Umlagern von quaderförmigen Artikeln 14 aus einem Quellbehälter 16 in einen Zielbehälter 18 mit einem Kommissioniersystem der oben beschriebenen Art.

In einem ersten, in Fig. 3a dargestellten Schritt wird der Artikel 14 in an sich bekannter Weise aus dem Quellbehälter 16 aufgenommen, wobei der Sauggreifer 12 den Artikel 14 an einer ersten, im Quellbehälter 16 horizontal ausgerichteten und nach oben weisenden Fläche 24a greift.

In einem zweiten, in Fig. 3b dargestellten Schritt wird der Artikel 14 auf der Ablagestruktur 20c abgelegt, wobei der Sauggreifer 12 schräg gestellt wird. Die Schrägstellung des Sauggreifers 12 kann durch eine Steuerung der regulären Achsen des als 5-Achs-Industrierroboters ausgestalteten Kommissionierroboters 10 erfolgen oder durch eine Drehung der Greifvorrichtung mit den austauschbaren Sauggreifer 12. Der Winkel des Sauggreifers 12 entspricht dabei im Wesentlichen dem Winkel einer der Ablageflächen 22a - 22c, so dass die drei nach unten weisenden Flächen des Artikels 14 auf den Ablageflächen 22a - 22c abgelegt werden. Wenn aufgrund einer ungenauen Greifposition oder aufgrund einer elastischen Deformation des Sauggreifers 12 der Kommissionierroboter 10 den Artikel 14 nicht präzise in die von den Ablageflächen 22a - 22c eingeschlossene Ecke legt, rutscht der Artikel 14 dennoch nach dem Loslassen in die Ecke hinein. Ähnliches gilt für die Orientierung des Artikels 14. Die Ablagestruktur 20c zentriert und orientiert den Artikel 14 unter der Wirkung der Schwerkraft automatisch.

Nach dem Ablegen des Artikels 14 wird in einem dritten, in Fig. 3c dargestellten Schritt die Ablagestruktur 20c mit Hilfe des Aktuators 20d um 120° um die vertikale Achse Z gedreht. Die Richtung der Drehung hängt von der gewünschten Orientierung des Artikels 14 im Zielbehälter 18 ab.

In einem vierten, in Fig. 3d dargestellten Schritt wird der Artikels 14 von der Ablagestruktur 20c aufgenommen, wobei der Sauggreifer 12 den Artikel 14 aufgrund der Drehung gemäß Fig. 3c an einer zweiten Fläche 24b greift, wobei die zweite Fläche 24b senkrecht zur ersten Fläche 24a orientiert ist.

Die Umorientierung des Artikels 14 gemäß Fig. 3a - 3d muss nur dann erfolgen, wenn die Orientierung bei der Aufnahme nicht der gewünschten Orientierung beim Ablegen entspricht. In manchen Fällen ist die Orientierung im Quellbehälter 16 aus den Stammdaten des Lagerverarbeitungssystems bekannt. Andernfalls wird mit Hilfe der Kamera 26a und einer Bildverarbeitungssoftware eine Orientierung des aus dem Quellbehälter 16 aufgenommenen quaderförmigen Artikels 14 ermittelt und dieser nur dann auf der Ablagestruktur 20c abgelegt und wieder aufgenommen wird, wenn die ermittelte Orientierung von einer Soll-Orientierung für die Ablage im Zielbehälter 18 abweicht. Falls der Artikel 14 bereits in der Soll-Orientierung für die Ablage im Zielbehälter 18 vorliegt, kann er direkt ohne Zwischenablage auf der Ablagestruktur 20c in den Zielbehälter 18 gelegt werden.

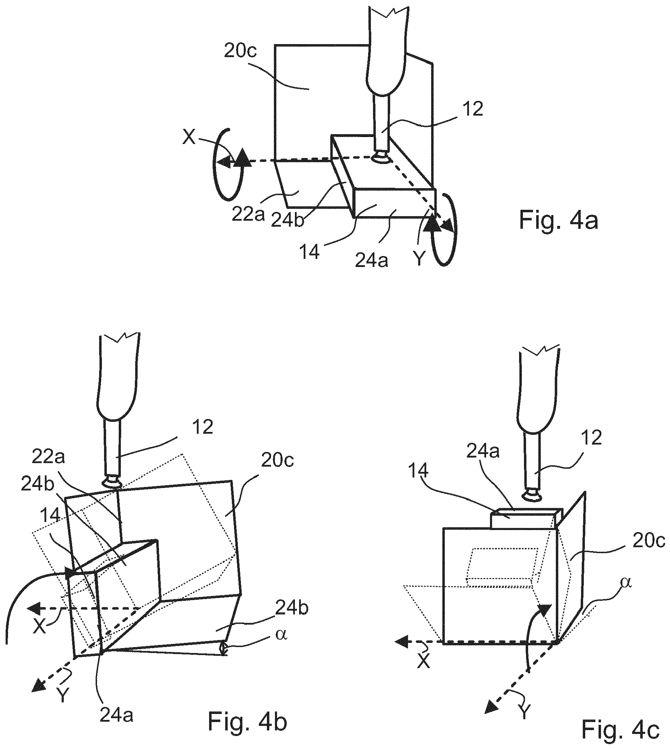

Die Figuren 4 - 7 zeigen weitere Ausgestaltungen der Erfindung. Um Wiederholungen zu vermeiden, beschränkt sich die folgende Beschreibung auf Unterschiede zu dem in den Figuren 1 - 3 dargestellten Ausführungsbeispiel, während im Hinblick auf unveränderte Merkmale auf die Beschreibung zu den Figuren 1 - 3 verwiesen wird. Gleich oder ähnlich wirkende Merkmale werden dabei mit gleichen Bezugszeichen versehen.

Fig. 4a - 4c zeigen ein Ausführungsbeispiel, in dem die winkelförmige Ablagestruktur 20c zwei Bewegungsfreiheitsgrade hat, und zwar zwei horizontale Achsen X, Y, um welche die Ablagestruktur 20c gekippt werden kann. Dadurch wird in einer konstruktiv und steuerungstechnisch einfachen Weise eine Umorientierung des Artikels 14 in jede beliebige Raumrichtung ermöglicht. Der durch den Sauggreifer 12 an einer ersten Seite gegriffene Artikel 14 kann in der in Fig. 4a dargestellten Ablagekonfiguration flach auf der Ablagefläche 22a abgelegt werden. Falls der Artikel 14 so orientiert werden soll, dass er mit der in Fig. 4a dem Betrachter zugewandten Seitenfläche nach oben weisend im Zielbehälter abgelegt wird, wird die Ablagestruktur durch einen entsprechenden Aktuator bzw. Servomotor um die Achse X in die in Fig. 4c dargestellte Aufnahmekonfiguration geschwenkt. Falls der Artikel 14 so orientiert werden soll, dass er mit der in Fig. 4a nach links weisenden Seitenfläche 24b nach oben weisend im Zielbehälter 18 abgelegt wird, wird die Ablagestruktur 20c durch einen entsprechenden Aktuator bzw. Servomotor um die Achse Y in die in Fig. 4b dargestellte Aufnahmekonfiguration geschwenkt. Wie Fig. 4b und Fig. 4c schematisch dargestellt ist in den Aufnahmekonfigurationen die untere Auflagefläche 24b der Ablagestruktur 20c im einen Winkel α zu ihrem Innenwinkel hin geneigt, um ein Umkippen des Artikels 14 oder ein Herausrutschen des Artikels 14 aus dem Innenwinkel aufgrund der Trägheit beim Abbremsen der Schwenkbewegung zu vermeiden. Um eine selbstzentrierende und selbstorientierende Wirkung zu erhalten kann auch in der in Fig. 4a dargestellten Ablagekonfiguration die untere Ablagefläche 22a schräg zum Innenwinkel hin geneigt sein, so dass ein ungenau abgelegter Artikel in den Innenwinkel hineinrutscht.

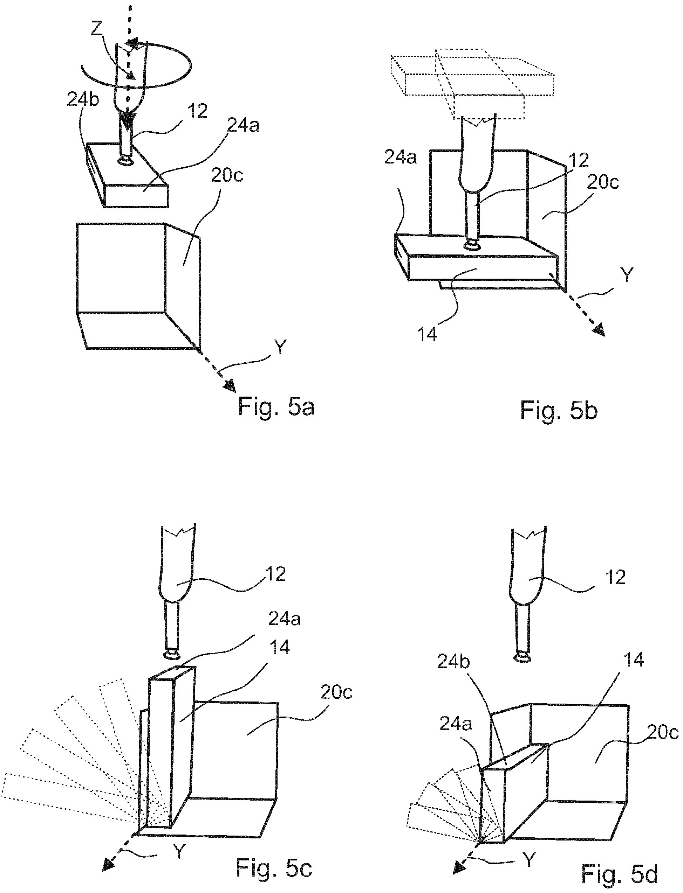

In dem in Fig. 5a - 5d dargestellten Ausführungsbeispiel ist die Ablagestruktur 20c um eine einzige horizontale Achse Y schwenkbar gelagert. Falls der Artikel 14 so orientiert werden soll, dass er mit der in Fig. 5a dem Betrachter zugewandten Seitenfläche nach oben weisend im Zielbehälter 18 abgelegt wird, wird der Artikel vor dem Ablegen mit der vertikalen Sauggreifer-Längsachse Z des Greifarms um 90° gedreht und dann auf der Ablagestruktur 20c wie in Fig. 5b dargestellt auf der Ablagestruktur abgelegt. Anschließend wird die Ablagestruktur 20c durch einen entsprechenden Aktuator bzw. Servomotor um die Achse Y in die in Fig. 5c dargestellte Aufnahmekonfiguration geschwenkt. Falls der Artikel 14 so orientiert werden soll, dass er mit der in Fig. 5a nach links weisenden Seitenfläche 24b nach oben weisend im Zielbehälter 18 abgelegt wird, der Artikel 14 ohne vorausgehende Drehung um die vertikale Achse die Ablagestruktur 20a wie abgelegt und durch einen entsprechenden Aktuator bzw. Servomotor um die Achse Y in die in Fig. 5d dargestellte Aufnahmekonfiguration geschwenkt. In den in Fig. 5c und Fig. 5d dargestellten Aufnahmekonfigurationen ist die untere Auflagefläche der Ablagestruktur zu ihrem Innenwinkel in geneigt, um ein Umkippen des Artikels oder ein Herausrutschen des Artikels aus dem Innenwinkel aufgrund der Trägheit beim Abbremsen der Schwenkbewegung zu vermeiden. Wie auch in dem in Fig. 4a - 4c dargestellten Ausführungsbeispiel kann die untere Ablagefläche sowohl in der Ablagekonfiguration als auch in der Aufnahmekonfiguration zum Innenwinkel geneigt sein, um eine selbstzentrierende Wirkung zu erreichen und ein Herausrutschen oder Umkippen des Artikels beim Abbremsen der Schwenkbewegung zu vermeiden.

In einer alternativen Ausgestaltung der Erfindung wird der Artikel vor nach dem Aufnehmen und vor dem Ablegen im Zielbehälter 18 mit der vertikalen Sauggreifer-Längsachse des Greifarms um 90° gedreht und dann im Zielbehälter 18 abgelegt. Die Steuerung 28 kann insbesondere auch dazu ausgelegt sein, abhängig von den Längenverhältnissen des Artikels 18 zu entscheiden, ob der Artikel vor dem Ablegen oder nach dem Aufnehmen um die Vertikale Achse des Endeffektors gedreht wird, so dass während der Kippbewegung der Aufnahmestruktur 20c ein möglichst stabiler Halt gewährleistet ist.

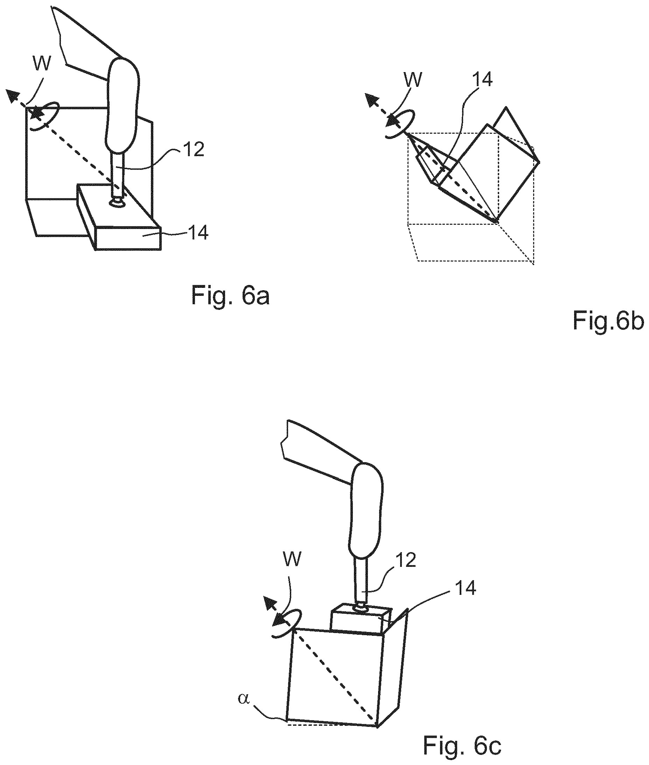

In dem in Fig. 6a - 6c dargestellten Ausführungsbeispiel der Erfindung wird vorgeschlagen, die Ablagestruktur 20c um eine schräg im Raum verlaufende Achse W schwenkbar gelagert ist. Dabei ist in Fig. 6a die Ablagekonfiguration und in Fig. 6c die Aufnahmekonfiguration dargestellt. Fig. 6b zeigt eine Zwischenkonfiguration, die während der Schwenkbewegung von der Ablagekonfiguration in die Aufnahmekonfiguration von der Ablagestruktur durchlaufen wird. In der in Fig. 6b dargestellten Zwischenstellung einer Schwenkbewegung gleitet der Artikel 14 unter Wirkung der Schwerkraft in den Ablagewinkel bzw. Innenwinkel der Ablagestruktur 20c hinein. Dadurch wird ein selbsttägiges Zentrieren und Ausrichten des Artikels 14 während der Schwenkbewegung ermöglicht, die eine Selbstzentrierung bzw. Selbstausrichtung in der Ablage- und Aufnahmekonfiguration der Ablagefläche ergänzen oder ersetzen kann.

Auch in dem in Fig. 6a - 6c dargestellten Ausführungsbeispiel ist die untere Ablagefläche sowohl h in der Aufnahmekonfiguration um einen Winkel α zum Innenwinkel geneigt, um eine selbstzentrierende Wirkung zu erreichen und ein Herausrutschen oder Umkippen des Artikels 14 beim Abbremsen der Schwenkbewegung zu vermeiden.

### Bezugszeichenliste

- 10: Kommissionierroboter
- 12: Sauggreifer
- 14: Artikel
- 16: Quellbehälter
- 18: Zielbehälter
- 20: Umgreif-Ablageplatz
- 20a: Sockel
- 20b: Stütze
- 20c: Ablagestruktur
- 22a, 22b, 22c: Ablagefläche
- 24a, 24b: Fläche
- 26: Kamera
- 28: Steuerung
- 30: Auffangfläche

## Patentansprüche

1. Kommissioniersystem mit einem Kommissionierroboter (10) einer Steuerung (28) und mit einem Sauggreifer (12) zum Greifen und Umlagern von Artikeln (14) und mit einem Umgreif-Ablageplatz (20) zum Ablegen und wieder Aufnehmen der Artikel (14),
**dadurch gekennzeichnet, dass**
der Umgreif-Ablageplatz (20) eine Ablagestruktur (20c) zum Ablegen eines Artikels (14) in einer ersten Orientierung, wobei die Ablagestruktur (20c) einen Anlagewinkel umfasst, der so konfiguriert ist, dass der Artikel (14) in einer wenigstens vorübergehend zwischen dem Ablegen und dem wieder Aufnehmen eines Artikels auftretenden Konfiguration unter Wirkung der Schwerkraft in den Ablagewinkel hineingleitet, und die Steuerung (28) dazu ausgelegt ist, den Sauggreifer (12) so zu steuern, dass dieser den Artikel (14) in einer anderen Orientierung als der ersten Orientierung wieder aufnimmt.

2. Kommissioniersystem nach Anspruch 1,
**gekennzeichnet durch**
einen Aktuator (20d) zum Bewegen der Ablagestruktur (20c), wobei die Steuerung (28) dazu ausgelegt ist, den Aktuator (20d) so zu steuern, dass die Ablagestruktur (20c) nach dem Ablegen und vor dem Aufnehmen des Artikels (14) so zu bewegt wird, dass eine Orientierung des Artikels (14) im Raum verändert wird.

3. Kommissioniersystem nach Anspruch 2,
**dadurch gekennzeichnet, dass**
die Steuerung (28) dazu ausgelegt ist, den Aktuator (20d) so zu steuern, dass die Ablagestruktur (20c) eine Schwenkbewegung von einer Ablagekonfiguration der Ablagestruktur (20c) zu einer Aufnahmekonfiguration der Ablagestruktur (20c) ausführt und die vorübergehend auftretende Konfiguration eine Zwischenstellung der Schwenkbewegung ist.

4. Kommissioniersystem nach einem der Ansprüche 1 - 3,
**dadurch gekennzeichnet, dass**
die Ablagestruktur (20c) winkelförmig, pyramidenförmig und/oder trichterförmig ist, wobei insbesondere die Ablagestruktur so gestaltet ist, dass eine Ecke eines darauf abgelegten quaderförmigen Artikels (14) zumindest in der vorübergehend auftretenden Konfiguration nach unten weist.

5. Kommissioniersystem nach einem der Ansprüche 1 - 4,
**dadurch gekennzeichnet, dass**
die Ablagestruktur (20c) drei im Wesentlichen senkrecht zueinanderstehende Ablageflächen (22a - 22c) umfasst.

6. Kommissioniersystem nach einem der vorhergehenden Ansprüche,
**dadurch gekennzeichnet, dass**
die Ablagestruktur (20c) um eine vertikale Achse (Z) drehbar gelagert ist.

7. Kommissioniersystem nach einem der vorhergehenden Ansprüche,
**dadurch gekennzeichnet, dass**
die Ablagestruktur (20c) um eine horizontale Achse (X, Y) schwenkbar gelagert ist.

8. Kommissioniersystem nach einem der vorhergehenden Ansprüche,
**dadurch gekennzeichnet, dass**
die Ablagestruktur (20c) um eine schräg im Raum verlaufende Achse (W) schwenkbar gelagert ist.

9. Kommissioniersystem nach einem der vorhergehenden Ansprüche,
**dadurch gekennzeichnet, dass**
die Ablagestruktur (20c) wenigstens zwei Bewegungsfreiheitsgrade (X, Y) hat.

10. Kommissioniersystem nach einem der vorhergehenden Ansprüche,
**gekennzeichnet durch**
eine die Ablagestruktur (20c) umgebende Auffangfläche (30) mit einem Gefälle zu einem Quellbehälter-Stellplatz, wobei die Auffangfläche (30) so konfiguriert ist, dass ein in einer Umgebung der Ablagestruktur herabfallender Artikel, der aus einem Quellbehälter aufgenommen wurde, wieder in den Quellbehälter rutscht oder rollt.

11. Ablagestruktur (20c) zur Verwendung in einem Kommissioniersystem nach einem der vorhergehenden Ansprüche.

12. Verfahren zum Umlagern von Artikeln (14) aus einem Quellbehälter (16) in einen Zielbehälter (18) mit einem Kommissioniersystem nach einem der Ansprüche 1 - 10, **gekennzeichnet durch** die Schritte:
Aufnehmen eines Artikels (14) aus dem Quellbehälter (16), wobei der Sauggreifer (12) den Artikel (14) an einer ersten Fläche greift;
Ablegen des Artikels (14) auf der Ablagestruktur (20c);
Aufnehmen des Artikels (14) von der Ablagestruktur (20c), wobei der Sauggreifer (12) den Artikel (14) an einer zweiten Fläche greift, wobei die zweite Fläche senkrecht zur ersten Fläche orientiert ist.

13. Verfahren nach Anspruch 12, wobei die Ablagestruktur (20c) nach dem Ablegen des Artikels (14) auf der Ablagestruktur (20c) und vor dem Aufnehmen des Artikels (14) von der Ablagestruktur (20c) um eine vertikale Achse gedreht wird.

14. Verfahren nach Anspruch 11 oder 13, wobei mit Hilfe einer Bildverarbeitungssoftware eine Orientierung des aus dem Zielbehälter (18) aufgenommenen quaderförmigen Artikels (14) ermittelt wird und dieser nur dann auf der Ablagestruktur (20c) abgelegt und wieder aufgenommen wird, wenn die ermittelte Orientierung von einer Soll-Orientierung für die Ablage im Zielbehälter (18) abweicht.
